# EUROPEAN PATENT APPLICATION

(11) **EP 2 570 837 A2**
(43) Date of publication of application: **20.03.2013**
(21) Application number: 12183875.9
(22) Date of filing: 11.09.2012
(51) Int. Cl.: G02B 7/10

(54) **Optical apparatus**

(30) Priority: 13.09.2011 JP 2011199033
(71) Applicant: Canon Kabushiki Kaisha, Tokyo 146-8501 (JP)
(72) Inventor: Koyama, Atsushi, Tokyo, Tokyo 146-8501 (JP); Nagao, Yuki, Tokyo, Tokyo 146-8501 (JP); Sasaki, Kunihiko, Tokyo, Tokyo 146-8501 (JP); Shimada, Shota, Tokyo, Tokyo 146-8501 (JP); Torii, Shigehiro, Tokyo, Tokyo 146-8501 (JP); Mizushima, Masayasu, Tokyo, Tokyo 146-8501 (JP); Ochi, Daisuke, Tokyo, Tokyo 146-8501 (JP); Shukuin, Hirokazu, Tokyo, Tokyo 146-8501 (JP)
(74) Representative: TBK

(57) **Abstract**

An optical apparatus includes a zoom optical system including a focus lens unit (9), an operation portion (14) configured to manually and mechanically change a focal length of the zoom optical system, and a controller (16) configured to control the focus lens unit (9) so as to move along a track depending on an object distance in an operation of the operation portion (14). The controller (16) moves the focus lens unit (9) to a second position that is different from a first position that is a position of the focus lens unit (9) in disconnecting a power when a first focal length that is a focal length of the zoom optical system in disconnecting the power is different from a second focal length that is a focal length of the zoom optical system in reconnecting the power.

## Description

### BACKGROUND OF THE INVENTION

### Field of the Invention

The present invention relates to an optical apparatus that performs a position control of a focus lens unit.

### Description of the Related Art

Conventionally, in an optical apparatus such as a camera, an optical system in which a movement track of a focus lens unit in a zoom operation changes in accordance with an object distance is commonly used. In order to control the optical system that performs such a complicated operation, there is a method of previously storing the movement track depending on the zoom for each object distance so as to determine the movement of the focus lens unit based on information of a zoom position and a position of the focus lens unit (or the object distance).

In this case, in order to obtain correct position information of the zoom position and the position of the focus lens unit, an encoder that is a position detection apparatus with high resolution is used. As such an encoder, from the viewpoint of cost, an incremental encoder that outputs a pulse number proportional to a moving amount from a reference position is often used, but it sometimes cannot start taking an image quickly in retaking the image.

Japanese Patent Publication No. H7-119869 discloses a method of storing information related to a lens position in accordance with turning a power switch off so as to drive a lens unit to a reference position before driving it to a stored position when the power switch is turned on again. Japanese Patent Laid-Open No. H9-189843 discloses a method of moving a lens unit to a reference position in accordance with turning a power switch off so as to quickly start taking an image when the power switch is turned on again.

However, in the optical apparatus such as a camera, in order to instantly change an angle of view, a manual zoom that manually performs a mechanical zoom operation is commonly used. In a case of using the manual zoom, the zoom operation can be performed even when the power switch is turned off. Therefore, when the lens unit is driven as conventional arts disclosed in Japanese Patent Publication No. H7-119869 and Japanese Patent Laid-Open No. H9-189843, there is a case where an in-focus operation on a target position cannot be performed.

### SUMMARY OF THE INVENTION

The present invention provides an optical apparatus capable of moving a focus lens unit to a position to be targeted at the time of turning on a power supply so as to correspond to a focal length that is changed by a manual zoom operation during cutting off the power supply.

The present invention in its first aspect provides an optical apparatus as specified in claims 1 to 11.

Further features and aspects of the present invention will become apparent from the following description of exemplary embodiments with reference to the attached drawings.

### BRIEF DESCRIPTION OF THE DRAWINGS

FIG. 1 is a schematic diagram of an optical apparatus in Embodiment 1.

FIG. 2 is a flowchart of illustrating an operation of the optical apparatus in Embodiment 1.

FIG. 3 is a schematic diagram of an optical apparatus in Embodiment 2.

FIG. 4 is a flowchart of illustrating an operation of the optical apparatus in Embodiment 2.

### DESCRIPTION OF THE EMBODIMENTS

Exemplary embodiments of the present invention will be described below with reference to the accompanied drawings. In each of the drawings, the same elements will be denoted by the same reference numerals and the duplicate descriptions thereof will be omitted.

### [EMBODIMENT 1]

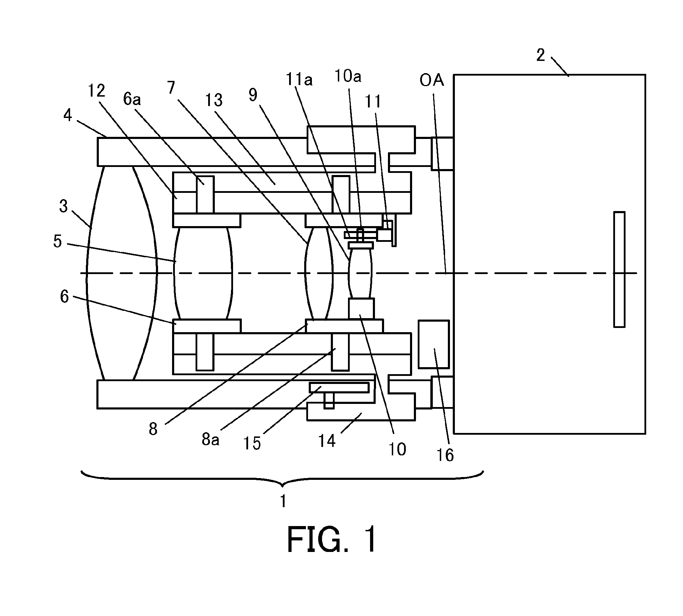

First of all, referring to FIG. 1, a configuration of an optical apparatus in Embodiment 1 of the present invention will be described. FIG. 1 is a schematic diagram of an optical apparatus (a camera system) in the present embodiment.

In FIG. 1, reference numeral 1 denotes an interchangeable lens (a lens barrel), and reference numeral 2 denotes a camera body. The interchangeable lens 1 is interchangeably mounted on the camera body 2. The interchangeable lens 1 is configured by each of the following elements. Reference numeral 3 denotes a first lens unit, which is fixed on a fixed cylinder 4 as an exterior. Reference numeral 5 denotes a second lens unit, which is fixed on a second lens holding frame 6. A cam follower 6a is provided on an outer circumference of the second lens holding frame 6. Reference numeral 7 denotes a third lens unit, which is fixed on a third lens holding frame 8. A cam follower 8a is provided on an outer circumference of the third lens holding frame 8.

Reference numeral 9 denotes a fourth lens unit (a focus lens unit), which is fixed on a fourth lens holding frame 10. The fourth lens unit 9 is configured so as to move along a track depending on an object distance during a zoom operation. The fourth lens holding frame 10 is provided with a rack portion 10a that engages with a lead screw 11a of a stepping motor 11, which is guided in a straight line by a straight line bar (not shown). The stepping motor 11 is fixed on the third lens holding frame 8. An optical system (a zoom optical system) is configured by the first lens unit 3, the second lens unit 5, the third lens unit 7, and the fourth lens unit 9.

Reference numeral 12 denotes a guide cylinder as a fixed portion. The guide cylinder 12 is provided with a longitudinal groove that engages with the cam follower 6a and the cam follower 8a and that extends in a direction of an optical axis OA (an optical axis direction). Reference numeral 13 denotes a cam cylinder. The movement of the cam cylinder 13 is limited in the optical axis direction with respect to the guide cylinder 12, and the cam cylinder 13 is rotatably held around the optical axis OA. The cam cylinder 13 is provided with cam grooves that engage with the cam follower 6a and the cam follower 8a.

Reference numeral 14 denotes a zoom operation ring (an operation portion). The zoom operation ring 14 is configured so that a focal length of the optical system can be manually and mechanically changed. The movement of the zoom operation ring 14 is limited in the optical axis direction with respect to the fixed cylinder 4, and the zoom operation ring 14 is rotatably held around the optical axis OA. The zoom operation ring 14 is coupled to the cam cylinder 13. Reference numeral 15 denotes a positioning sensor. The positioning sensor 15 is an absolute encoder that is fixed on the fixed cylinder 4 and that outputs a specific value in accordance with the rotation of the zoom operation ring 14. Reference numeral 16 denotes a microcomputer (a controller). The microcomputer 16 controls the communication with the camera body 2 and also performs various kinds of controls of the interchangeable lens 1. The microcomputer 16 includes a memory (a storage portion), which stores for example a position of the fourth lens unit 9 (a first position) when a power is disconnected and a focal length of the optical system (a first focal length) are stored as described below.

Subsequently, an operation of each lens unit in the interchangeable lens 1 will be described. When the zoom operation ring 14 is rotated, according to the mutual interaction of the longitudinal groove of the guide cylinder 12 and the cam groove of the cam cylinder 13, the cam follower 6a and the cam follower 8a that engage with each of them are moved. As a result, the second lens unit 5 and the third lens unit 7 move in the optical axis direction back and forth without rotating so as to change the focal length.

In this case, the stepping motor 11 is fixed on the third lens holding frame 8. Therefore, the fourth lens unit 9 moves back and forth in accordance with the rotation of the zoom operation ring 14, and is also driven by the stepping motor 11. In the present embodiment, the fourth lens unit 9 moves based on a zoom movement track for each object distance that is previously stored in the microcomputer 16 in accordance with an output of the positioning sensor 15 and a pulse number from a reference position (not shown) of the stepping motor 11. In such operations, the optical apparatus of the present embodiment has a function as a so-called zoom lens in which the object distance does not vary even when the focal length is changed.

In the optical apparatus (the camera system) of the present embodiment, when the interchangeable lens 1 is configured so that a power is supplied from the camera body 2, the fourth lens unit 9 is driven by the stepping motor 11 that operates by the power. Therefore, when the power is disconnected, the focus operation based on the drive of the fourth lens unit 9 cannot be performed. On the other hand, the focal length can be mechanically changed by the rotating operation of the zoom operation ring 14 by a user, i.e. by manually operating the interchangeable lens 1. Accordingly, when the power is disconnected, the optical apparatus of the present embodiment cannot perform the operation based on the zoom movement track for each object distance and it is in a state of a so-called varifocal lens that varies the object distance in changing the focal length.

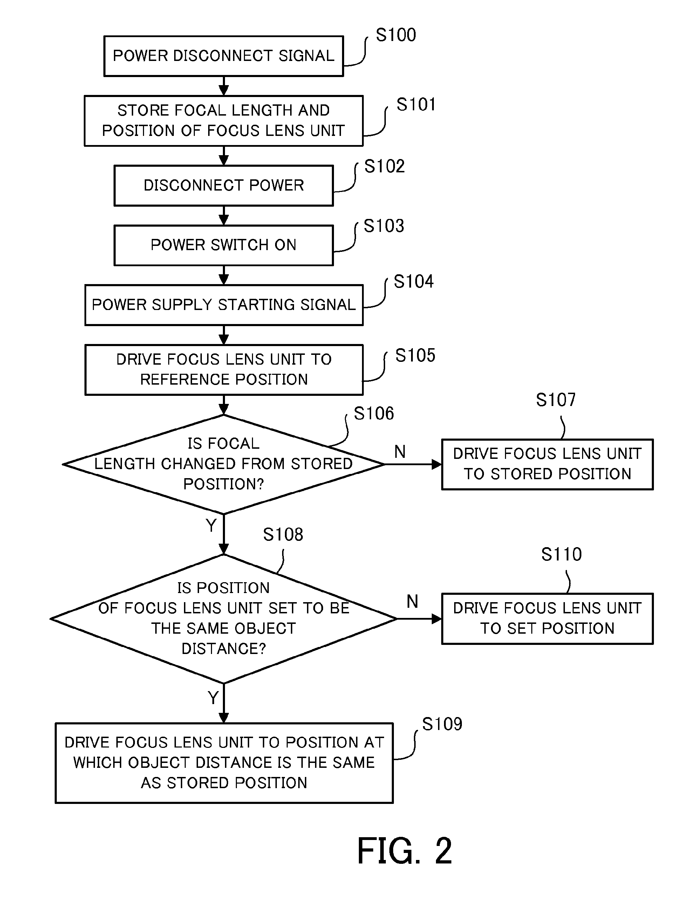

Next, referring to FIG. 2, the operation of the optical apparatus in the present embodiment will be described. FIG. 2 is a flowchart of illustrating the operation of the optical apparatus. The flowchart of FIG. 2 is performed based on a command of the microcomputer 16.

In the process of disconnecting the power, first of all, in Step S100, the interchangeable lens 1 receives a power disconnect signal from the camera body 2. Subsequently, in Step S101, the microcomputer 16 (a storage portion) stores the focal length of the optical system (a first focal length) and the position of the fourth lens unit 9 (the first position). In the present embodiment, an output value of the positioning sensor 15 is stored as a focal length of the optical system. In addition, the pulse number from a predetermined reference position of the stepping motor 11 is stored as a position of the fourth lens unit 9. Then, in Step S102, the power is disconnected.

Then, in Step S103, when a power switch is turned on so as to supply the power again (when the power is turned on), in Step S104, the camera body 2 sends a power supply starting signal to the interchangeable lens 1. Subsequently, in Step S105, the microcomputer 16 drives the fourth lens unit 9 to the predetermined reference position.

Next, in Step S106, the microcomputer 16 compares an output value of the positioning sensor 15 that is stored in Step S101 (a first focal length of the optical system) with an output value of the positioning sensor 15 in Step S106 (a second focal length of the optical system). In Step S106, when the microcomputer 16 determines that the second focal length of the optical system is the same as the first focal length, i.e. the focal length is not changed, the flow proceeds to Step S107. In Step S107, the microcomputer 16 drives the fourth lens unit 9 by the pulse number which is stored in Step S101 so as to move the fourth lens unit 9 to a position immediately before disconnecting the power (the first position).

On the other hand, in Step S106, when the microcomputer 16 determines that the second focal length is different from the first focal length, i.e. the focal length is changed, the flow proceeds to Step S108. In this case, the microcomputer 16 controls the fourth lens unit 9 so as to move to the second position, and in the present embodiment, the optical apparatus is configured so that the second position is different in accordance with a setting state as follows.

In Step S108, the microcomputer 16 confirms a position setting state of the fourth lens unit 9. The optical apparatus of the present embodiment includes a selection portion (not shown) that selects two different positions as a second position of the fourth lens unit 9. Therefore, in accordance with the operation of the selection portion provided on the interchangeable lens 1 or the camera body 2 by the user, the positions of the fourth lens unit 9 can be previously set so as to be the same object distance between before and after the power is disconnected.

When the fourth lens unit 9 is set so as to be driven to the same object distance as the pulse number stored in Step S101, the flow proceeds to Step S109. In Step S109, the microcomputer 16 obtains the object distance based on the zoom track for each object distance previously stored and the pulse number stored in Step S101. Then, the microcomputer 16 drives the fourth lens unit 9 in accordance with the output value of the positioning sensor 15. In this case, the second position of the fourth lens unit 9 is a position at which the same object distance as the object distance obtained when the fourth lens unit 9 is located at the first position (a stored position) is obtained.

On the other hand, in Step S108, when the position of the fourth lens unit 9 is not set so as to be the same object distance between before and after the power is disconnected, the flow proceeds to Step S110. In Step S110, the microcomputer 16 drives the fourth lens unit 9 to a predetermined set position. The predetermined set position means, for example, a case where the fourth lens unit 9 holds the position as it is without moving (a reference position), a case where it is moved so as to focus on infinity (an infinity position), a case where it is moved so as to focus on a predetermined object distance (a position of a predetermined object distance), or the like. Thus, since the position of the fourth lens unit 9 can be set in accordance with the preference of the user when the power is turned on again, the user can proceed with taking an image without feeling stress.

### [EMBODIMENT 2]

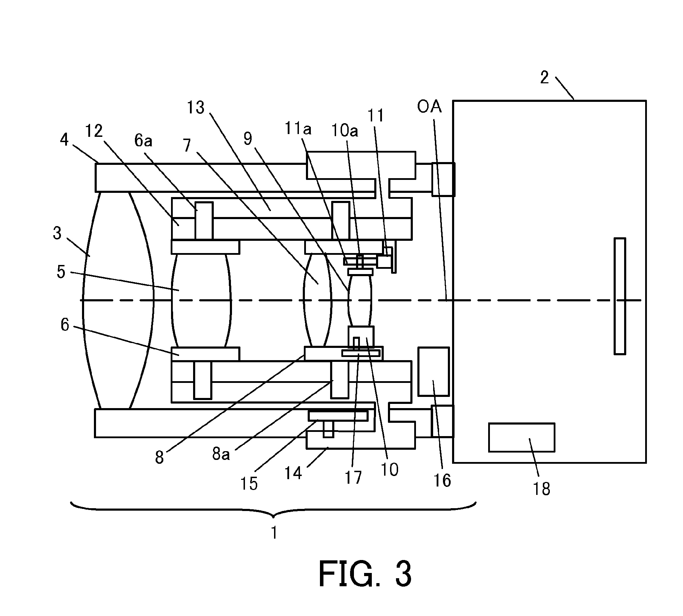

Next, referring to FIG. 3, a configuration of an optical apparatus in Embodiment 2 of the present invention will be described. FIG. 3 is a schematic diagram of an optical apparatus (a camera system) in the present embodiment. In FIG. 3, each of the same elements as those of FIG. 1 is denoted by the same symbol, and descriptions thereof are omitted.

In FIG. 3, reference numeral 17 denotes a positioning sensor. The positioning sensor 17 is an absolute encoder that is fixed on the third lens holding frame 8 and that outputs a specific value depending on a position of the fourth lens holding frame 10. In the present embodiment, using the positioning sensor 17 that is an absolute encoder, the position of the fourth lens holding frame 10 is detected. Therefore, differently from Embodiment 1, it is not necessary to store the pulse number (a count value) of the stepping motor 11. When a power switch is turned on again (at the time of reconnecting the power), it is also not necessary to drive the fourth lens holding frame 10 to a predetermined reference position, and therefore quicker restart of taking an image is possible.

Reference numeral 18 denotes a state determination portion that determines a state of the optical apparatus, which is provided in the camera body 2. The state determination portion 18 is, for example a global positioning system receiver (GPS receiver), a temperature sensor, an image recognition portion, a time storage portion, or the like, and it not limited to them.

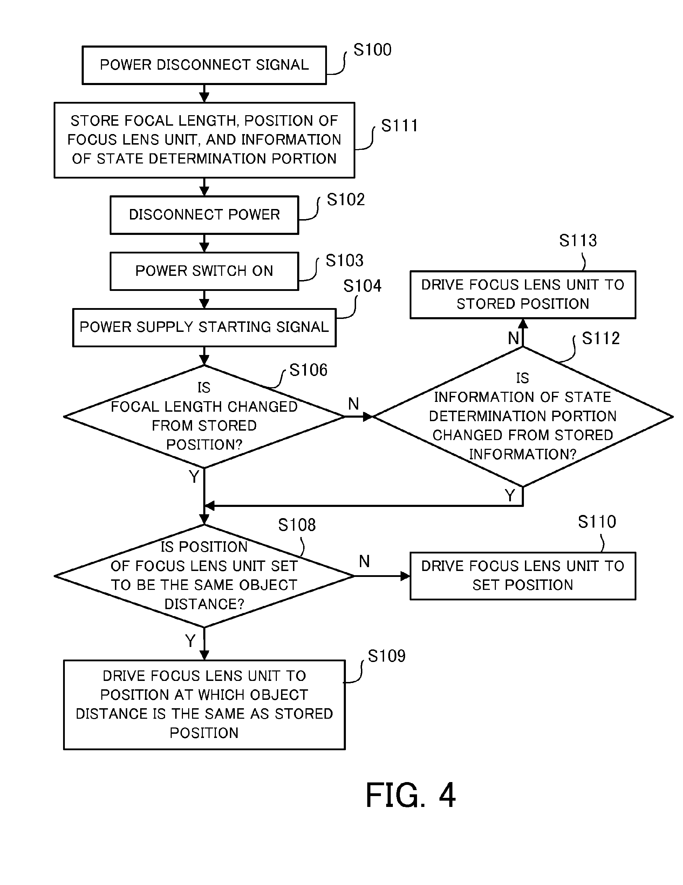

Next, referring to FIG. 4, an operation of the optical apparatus in the present embodiment will be described. FIG. 4 is a flowchart of illustrating the operation of the optical apparatus. The flowchart of FIG. 4 is performed based on a command of the microcomputer 16 (the controller). In FIG. 4, each of the same elements as those of FIG. 2 is denoted by the same symbol, and descriptions thereof are omitted.

In the process of disconnecting the power, first of all, in Step S100, the interchangeable lens 1 receives a power disconnect signal from the camera body 2. Subsequently, in Step S111, the microcomputer 16 (the storage portion) stores a focal length (a first focal length), a position of the fourth lens unit 9 (a first position), and an output value of the state determination portion 18 (the first output value). In the present embodiment, an output value of the positioning sensor 15 is stored as a focal length, and an output value of the positioning sensor 17 is stored as a position of the fourth lens unit 9. The output value of the state determination portion 18 is, for example, latitude/longitude information for the GPS receiver, an environmental temperature for the temperature sensor, an image for the image recognition portion, or a time for the time storage portion. Then, in Step S102, the power is disconnected.

Then, when the power switch is turned on so that the power is supplied again in Step S103, the camera body 2 sends a power supply starting signal to the interchangeable lens 1 in Step S104. Subsequently, in Step S106, the microcomputer 16 compares the output value of the positioning sensor 15 stored in Step S111 (the first focal length of the optical system) with the output value of the positioning sensor 15 in Step S106 (the second focal length of the optical system). When the microcomputer 16, in Step S106, determines that the second focal length of the optical system is the same as the first focal length, i.e. the focal length is not changed, the flow proceeds to Step S112.

In Step S112, the microcomputer 16 compares the output value of the state determination portion 18 stored in Step S111 (the first output value) with the output value of the state determination portion 18 in Step S112 (the second output value).

In Step S112, when the microcomputer 16 determines that the first output value is the same as the second output value, it considers that a peripheral environment is not changed and the flow proceeds to Step S113. The microcomputer 16 performs a drive control of the fourth lens unit 9 so that the output value of the positioning sensor 17 in Step S113 becomes equal to or close to the output value of the positioning sensor 17 stored in Step S111 (the first position).

On the other hand, in Step S112, when the microcomputer 16 determines that the first output value is different from the second output value, it considers that the peripheral environment has been changed and the flow proceeds to Step S108. In Step S108, the microcomputer 16 confirms a position setting state of the fourth lens unit 9. The optical apparatus of the present embodiment is configured to be previously settable so that positions of the fourth lens unit 9 between before and after disconnecting the power has the same object distance each other in accordance with the operation of the interchangeable lens 1 or the camera body 2 by the user.

When the fourth lens unit 9 is set so as to be driven to be the same object distance as that of the fourth lens unit 9 stored in Step S111, the flow proceeds to Step S109. In Step S109, the microcomputer 16 obtains the object distance based on the previously-stored zoom movement track for each object distance and the output value of the positioning sensor 17 stored in Step S111. Subsequently, the microcomputer 16 drives the fourth lens unit 9 in accordance with the output value of the positioning sensor 15. In this case, the second position of the fourth lens unit 9 is a position at which the same object distance as the object distance obtained in a case where the fourth lens unit 9 is located at the first position (the stored position) is obtained.

On the other hand, in Step S108, when the positions of the fourth lens unit 9 between before and after disconnecting the power are not set to be the same object distance, the flow proceeds to Step S110. In Step S110, the microcomputer 16 drives the fourth lens unit 9 to the predetermined set position (the second position). In the embodiment, the predetermined set position is as described in Embodiment 1. Thus, since the position of the fourth lens unit 9 can be set in accordance with the preference of the user when the power is turned on again, the user can restart taking an image without feeling stress.

According to each embodiment described above, an optical apparatus that is capable of driving a fourth lens unit (a focus lens unit) moved by a manual operation to a position targeted at the time of turning on the power can be provided.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

For example, the optical apparatus of each embodiment described above is configured so that the interchangeable lens is detachably mounted on the camera body, but the embodiment can also be applied to an optical apparatus (an image pickup apparatus) that is configured so that a lens is integrally mounted on the camera body.
An optical apparatus includes a zoom optical system including a focus lens unit (9), an operation portion (14) configured to manually and mechanically change a focal length of the zoom optical system, and a controller (16) configured to control the focus lens unit (9) so as to move along a track depending on an object distance in an operation of the operation portion (14). The controller (16) moves the focus lens unit (9) to a second position that is different from a first position that is a position of the focus lens unit (9) in disconnecting a power when a first focal length that is a focal length of the zoom optical system in disconnecting the power is different from a second focal length that is a focal length of the zoom optical system in reconnecting the power.

## Claims

1. An optical apparatus (1) comprising:
a zoom optical system including a focus lens unit (9);
an operation portion (14) configured to manually and mechanically change a focal length of the zoom optical system; and
a controller (16) configured to control the focus lens unit (9) so as to move along a track depending on an object distance in an operation of the operation portion (14),
wherein the controller (16) moves the focus lens unit (9) to a second position that is different from a first position that is a position of the focus lens unit (9) in disconnecting a power when a first focal length that is a focal length of the zoom optical system in disconnecting the power is different from a second focal length that is a focal length of the zoom optical system in reconnecting the power.

2. The optical apparatus (1) according to claim 1, further comprising a storage portion configured to store the first position and the first focal length.

3. The optical apparatus (1) according to claim 2, wherein the controller (16) stores the first position and the first focal length in the storage portion after receiving a power disconnect signal.

4. The optical apparatus (1) according to claim 1 or 2, wherein the focus lens unit (9) is moved to the first position when the first focal length is the same as the second focal length.

5. The optical apparatus (1) according to any one of claims 1 to 3, further comprising a state determination portion configured to determine a state of the optical apparatus,
wherein the controller (16) moves the focus lens unit (9) to the first position when determining that the second focal length is the same as the first focal length and that a first output value that is an output value of the state determination portion in disconnecting the power is the same as a second output value that is an output value of the state determination portion in reconnecting the power, and
wherein the controller (16) moves the focus lens unit (9) to the second position when determining that the second focal length is different from the first focal length or the second output value is different from the first output value.

6. The optical apparatus (1) according to claim 5, further comprising a storage portion configured to store the first output value.

7. The optical apparatus (1) according to claim 6, wherein the controller (16) stores the first output value in the storage portion after receiving a power disconnect signal.

8. The optical apparatus (1) according to any one of claims 1 to 7, wherein the second position of the focus lens unit (9) is a position at which the same object distance as an object distance in disconnecting the power is obtained.

9. The optical apparatus (1) according to any one of claims 1 to 8, wherein the controller (16) sets a position of the focus lens unit (9) corresponding to the second focal length in a set object distance as the second position and moves the focus lens unit (9) to the second position.

10. The optical apparatus (1) according to claim 9, further comprising a selection portion configured to select any one of a position at which the same object distance as the object distance obtained in a case where the focus lens unit (9) is located at the first position is obtained or a predetermined set position as the second position of the focus lens unit (9).

11. The optical apparatus (1) according to claim 10, wherein a position at which an object distance different from an object distance in disconnecting the power is obtained is selectable as the second position of the focus lens unit (9) by the selection portion.
